# EUROPÄISCHE PATENTSCHRIFT

(11) **EP 2 269 131 B1**
(45) Veröffentlichungstag und Bekanntmachung des Hinweises auf die Patenterteilung: **05.02.2020**
(21) Anmeldenummer: 09730850.6
(22) Anmeldetag: 07.04.2009
(51) Int. Cl.: G06F 3/0488

(54) **ANZEIGE- UND BEDIENVORRICHTUNG FÜR EIN KRAFTFAHRZEUG SOWIE VERFAHREN ZUM BETREIBEN EINER SOLCHEN**
DISPLAY AND CONTROL DEVICE FOR A MOTOR VEHICLE AND METHOD FOR OPERATING SAME
DISPOSITIF D'AFFICHAGE ET DE COMMANDE POUR UN VÉHICULE MOTORISÉ ET PROCÉDÉ D'UTILISATION D'UN TEL DISPOSITIF

(30) Priorität: 07.04.2008 DE 102008017176
(43) Veröffentlichungstag der Anmeldung: 05.01.2011
(73) Patentinhaber: Volkswagen Aktiengesellschaft, 38440 Wolfsburg (DE)
(72) Erfinder: WÄLLER, Christoph, 38106 Braunschweig (DE); BACHFISCHER, Katharina, 40476 Düsseldorf (DE); BENDEWALD, Lennart, 38442 Wolfsburg (DE); WENGELNIK, Heino, 38442 Wolfsburg (DE); HEIMERMANN, Matthias, 38302 Wolfenbüttel (DE); DALCHOW, Jan-Lars, 38104 Braunschweig (DE)
(74) Vertreter: Obst, Bernhard
(86) Internationale Anmeldenummer: PCT/EP2009/002772
(87) Internationale Veröffentlichungsnummer: WO 2009/124782

(56) Entgegenhaltungen:
- EP-A1- 0 813 989
- EP-A2- 1 607 850
- EP-A2- 1 770 473
- WO-A2-2006/020305
- AU-A4- 2007 101 053
- US-A1- 2004 227 741
- US-A1- 2006 047 386
- US-A1- 2007 064 004
- US-A1- 2008 036 743
- US-A1- 2008 052 945
- US-B1- 6 545 669

## Beschreibung

Die Erfindung betrifft eine Anzeige- und Bedienvorrichtung eines Kraftfahrzeuges sowie ein Verfahren zum Betreiben einer solchen Anzeige- und Bedienvorrichtung. Insbesondere betrifft die Erfindung eine Anzeige- und Bedienvorrichtung, die mindestens eine Anzeigevorrichtung und eine mit der mindestens einen Anzeigevorrichtung gekoppelte berührungsempfindliche Positionserfassungseinheit umfasst, über die berührende Betätigungen zum Erfassen von Nutzereingaben erfasst werden können, sowie ein Verfahren zum Betreiben einer solchen Anzeige- und Bedienvorrichtung, mit dem berührende Betätigungen erfasst und ausgewertet werden.

Moderne Kraftfahrzeuge stellen eine Vielzahl von Komfortfunktionen bereit. Zusätzlich und/oder alternativ sind eine Vielzahl von Systemen vorhanden, die eine Nutzung eines Kraftfahrzeugs für die Nutzer erleichtern und/oder angenehm gestalten sollen. Je komplexer die Funktionen und/oder Systeme werden, die von den Nutzern zu bedienen sind, desto mehr Bedienelemente oder desto komplexere Bedienelemente werden benötigt. Da ein Bauraum in Kraftfahrzeugen, der für eine Anordnung von Bedienelementen bereit steht, begrenzt ist, bieten sich insbesondere Multifunktionsbedienvorrichtungen, die beispielsweise als Anzeige- und Bedienvorrichtungen ausgebildet sind, für diese Zwecke an. Insbesondere Anzeige- und Bedienvorrichtungen, die eine Anzeigevorrichtung und eine mit der Anzeigevorrichtung gekoppelte berührungsempfindliche Positionserfassungseinheit umfassen, ermöglichen es, eine Vielzahl unterschiedlicher fahrzeuginterner und sogar fahrzeugexterner oder mit dem Fahrzeug kurzzeitig gekoppelter Systeme sowie Komfortfunktionen zu bedienen. Über eine Darstellung von Informationen auf der Anzeigefläche ist es möglich, dem Nutzer mitzuteilen, welche Funktion und/oder Aktion über eine Berührung der berührungsempfindlichen Positionserfassungseinheit ausgelöst und/oder aktiviert werden können. Besonders bevorzugt sind die Anzeigevorrichtung und die berührungsempfindliche Positionserfassungseinheit in einen so genannten Touchscreen integriert. Hierbei ist die berührungsempfindliche Positionserfassungseinheit transparent ausgestaltet und unmittelbar vor einer Anzeigefläche der Anzeigevorrichtung angeordnet. Es sind jedoch auch andere Ausführungsformen von Anzeige- und Bedienvorrichtungen denkbar, bei denen eine Anzeigevorrichtung mit einer berührungsempfindlichen Positionserfassungseinheit gekoppelt ist. Mit der Anzeigevorrichtung und der berührungsempfindlichen Positionserfassungseinheit ist eine Steuereinheit gekoppelt. Diese steuert zum einen eine Anzeige von Informationen auf der Anzeigefläche der Anzeigevorrichtung. Zum anderen umfasst die Steuereinrichtung eine Auswertelogik, die die Berührpositionen auswertet und beispielsweise mit den auf der Anzeigefläche dargestellten Informationen korreliert, um hieraus zu ermitteln, welche Funktion und/oder Aktion durch eine berührende Betätigung ausgelöst werden sollen. Die Steuereinrichtung erzeugt entsprechende Steuersignale, um eine Funktionsausführung und/oder Aktionsausführung zu bewirken.

Aus der US 2006/0047386 A1 sind eine Vorrichtung und ein Verfahren für eine Bedienvorrichtung und ein Bediensystem in einem Kraftfahrzeug bekannt, durch die eine Zeit einer Ablenkung eines Fahrers bei der Bedienung reduziert wird. Ein oder mehrere berührungsempfindliche Flächen (Touchpads) sind an dem Steuerrad des Kraftfahrzeugs befestigt. Über ein Ausführen vordefinierter synchronisierter Muster kann der Fahrer Funktionen auslösen und/oder steuern.

Mit den bekannten Systemen lassen sich in hierarchischen Menüstrukturen organisierte Funktionsaufrufe und/oder Aktionsaufrufe ausführen. Wünschenswert ist es jedoch, auch intuitive komplexere Bedienbetätigungen zu ermöglichen, um eine schnellere und fehlerunanfällige Bedienung im Kraftfahrzeug seitens der Nutzer zu ermöglichen, insbesondere um einen Fahrer nicht unnötig vom Straßenverkehr abzulenken.

Der Erfindung liegt somit die technische Aufgabe zugrunde, eine verbesserte Anzeige- und Bedienvorrichtung eingangs genannter Art sowie ein verbessertes Verfahren zum Betreiben einer solchen Vorrichtung zu schaffen, die eine einfachere und intuitivere Bedienung von Systemen und/oder Funktionen in einem Kraftfahrzeug ermöglichen.

Die Aufgabe wird erfindungsgemäß durch eine Anzeige- und Bedienvorrichtung mit den Merkmalen des Patentanspruchs 1 sowie ein Verfahren mit den Merkmalen des Patentanspruchs 7 gelöst. Vorteilhafte Ausgestaltungen der Erfindung ergeben sich aus den Unteransprüchen.

Hierfür ist vorgesehen, eine Anzeige- und Bedienvorrichtung für ein Kraftfahrzeug zu schaffen, die mindestens eine Anzeigevorrichtung, eine mit der mindestens einen Anzeigevorrichtung gekoppelte berührungsempfindliche Positionserfassungseinheit und eine mit der mindestens einen Anzeigevorrichtung und der Positionserfassungseinheit gekoppelte Steuereinrichtung umfasst, wobei die Steuereinrichtung eine Auswertelogik umfasst, die von der Positionserfassungseinheit erfasste Berührpositionen auswertet und hierüber eine Steuerung einer Darstellung von Informationen auf der Anzeigevorrichtung und ein Aufrufen von Funktionen und/oder Steuern von über die Anzeige- und Bedienvorrichtung bedienbaren Systemen beeinflusst, wobei die Auswertelogik ausgebildet ist, die erfassten Berührpositionen zeitaufgelöst auszuwerten. Eine zeitaufgelöste Auswertung der Berührpositionen ermöglicht es, zusätzliche Informationen, insbesondere berührende, die Positionserfassungseinheit streifende Bewegungen der Nutzer zu erfassen und gezielt auszuwerten. Hierüber können Bewegungsabläufe eines Betätigungselements eines Nutzers, welches in der Regel ein Finger sein wird, erfasst und ausgewertet werden, und zur Bedienung und/oder Steuerung von Funktionen oder Systemen herangezogen werden. Eine Vielfältigkeit der möglichen Betätigungshandlungen wird hierdurch gesteigert, so dass ohne eine Erhöhung der Anzahl der dargestellten Informationen eine größere Anzahl von unterschiedlichen Betätigungsabsichten eines Nutzers erkannt werden können.

Ferner ist vorgesehen, dass die zeitlich nacheinander stetig ineinander übergehenden erfassten Berührpositionen zu einer Berührspur zusammengefasst werden und die Auswertelogik mindestens eine Differenziereinheit umfasst, die eine Geschwindigkeit und/oder eine Beschleunigung einer die Berührspur erzeugenden entlangstreifenden Betätigungsbewegung ermittelt, und die Beeinflussung der Steuerung für unterschiedliche ermittelte Geschwindigkeiten und/oder Beschleunigungen unterschiedlich ist. Neben einer Form, einer so genannten Berührspur, wird hierbei eine Geschwindigkeit oder eine Beschleunigung der Bewegung des Betätigungselements ausgewertet, mit der dieses die Positionserfassungseinheit streifend berührt. Dieses erhöht erneut eine Anzahl möglicher unterscheidbarer Betätigungshandlungen und somit Nutzereingaben.

Um eine Benutzung der Anzeige- und Bedienvorrichtung sowie eine Steuerung von Systemen und/oder Funktionen intuitiv zu gestalten, ist es wünschenswert, Darstellungsobjekte, d. h. auf der Anzeigefläche der Anzeigevorrichtung dargestellte Informationen, auf dieser Anzeigefläche verschieben zu können. Um eine an eine reale Welt angepasste Bewegung von Objekten zu ermöglichen, ist bei einer erfindungsgemäßen Ausführungsform der Erfindung vorgesehen, dass die Steuereinheit ausgebildet ist, auf der Anzeigefläche dargestellten Objekten physikalische Eigenschaften, nämlich eine Masse und ein Reibwert oder Reibungskoeffizent, zuzuordnen und die Auswertelogik anhand einer ermittelten Beschleunigung mit der eine die Berührspur erzeugende entlangstreifende Betätigungsbewegung ausgeführt ist, und zumindest einer Richtung sowie gegebenenfalls weitere Eigenschaften der Berührspur und/oder der die Berührspur erzeugenden Bewegung ein Bedienimpuls ermittelt wird, und ein Objekt, in dessen Darstellungsbereich oder Aktivierungsbereich die Berührspur beginnt, gemäß einer anhand der zugeordneten Masse und dem zugeordneten Reibungskoeffizienten und des ermittelten Bedienimpulses errechneten Bahnkurve auf der Anzeigevorrichtung bewegt wird. Einem dargestellten Objekt kann beispielsweise eine Masse sowie ein Reibungskoeffizient oder Reibwert zugeordnet werden, mit dem das Objekt über die Anzeigefläche bewegt werden kann. Anhand einer Beschleunigung, die ein Betätigungselement beim Erzeugen der Berührspur ausführt, wird einem Objekt ein Bedienimpuls zugeordnet, in dessen Darstellungs- bzw. Aktivierungsbereich die erzeugte Berührspur ihren Ursprung hat. Als Aktivierungsbereich wird der Bereich um einen Darstellungsbereich eines Objekts angesehen, in dem eine Berührposition dem Objekt zugeordnet wird. Insbesondere bei kleinen Objekten kann es vorgesehen sein, dass ein Aktivierungsbereich größer als ein Darstellungsbereich des Objekts ist. Hierdurch wird eine Treffsicherheit hinsichtlich einer Berührung des Objekts durch einen Nutzer erhöht.

Erfindungsgemäß umfasst die Anzeige- und Bedienvorrichtung mindestens zwei voneinander getrennt ausgebildete Anzeigeflächen und ist die Steuereinrichtung ausgebildet, das Objekt, dessen Bahnkurve aus einer der Anzeigeflächen in einer Richtung, in der sich die mindestens eine andere Anzeigefläche befindet, um eine vorgegebene Mindestlänge hinausweist, in der anderen der mindestens zwei Anzeigeflächen zur Anzeige zubringen. Eine Bahnkurve umfasst die Informationen, an welchem Ort das Objekt zu einem bestimmten Zeitpunkt dargestellt wird. Neben der geometrischen Form einer von dem Objekt durchlaufenen Kurve ist somit auch eine Information umfasst, mit welcher Geschwindigkeit und Beschleunigung bzw. Verzögerung das Objekt sich entlang dieser Kurve bewegt. Ist eine errechnete Bahnkurve so ausgestaltet, dass die Bahnkurve um eine Mindestlänge aus der einen Anzeigefläche, in der sich das Objekt ursprünglich befindet, hinausweist, d. h., dass zumindest ein Teil des Objekts, vorzugsweise das gesamt Objekt, bei der Bewegung entlang der Bahnkurve aus der Anzeigefläche heraus bewegt wird, so wird das Objekt in eine von der ersten Anzeigefläche getrennte Anzeigefläche bewegt, sofern sich diese zumindest in etwa in der Richtung relativ zu der ersten Anzeigefläche befindet, in die die Bahnkurve beim Verlassen und/oder außerhalb der ersten Anzeigefläche weist.

Eine Anzahl der erfassbaren und unterscheidbaren Nutzerbetätigungshandlungen wird weiter gesteigert, wenn die berührungsempfindliche Positionserfassungseinheit ausgebildet ist, die Position von mindestens zwei, vorzugsweise mehreren, voneinander beabstandeten zeitgleich stattfindenden Berührungen zu erfassen, und die Auswertelogik ausgebildet ist, die unterschiedlichen Berührpositionen in Koinzidenz auszuwerten. Unter in Koinzidenz auswerten wird hier verstanden, dass eine zeitliche Korrelation der durch voneinander beabstandete Berührpositionen erzeugten Berührspuren ausgeführt wird. Berührt ein Nutzer die berührungsempfindliche Positionserfassungseinheit beispielsweise mit zwei leicht auseinander gespreizten Fingern zeitgleich und führt mit ihnen eine streifende Bewegung aus, so werden von der Auswertelogik zwei zeitgleich, d. h. in Koinzidenz, erfasste Berührspuren erkannt. Die Auswertelogik erkennt hieran eine Nutzereingabe, die sich von einer Benutzereingabe unterscheidet, bei der dieselben Berührspuren zeitlich getrennt nacheinander über die berührungsempfindliche Positionserfassungseinheit erfasst werden.

Die durch Nutzer vorgenommenen Betätigungshandlungen können auch als Berührungsgesten oder Touch-Gesten bezeichnet werden. Um diese zu unterscheiden ist bei einer bevorzugten Ausführungsform der Erfindung vorgesehen, dass die Auswertelogik ausgebildet ist, jeweils eine Richtung der Berührspur und/oder eine Form der Berührspur und/oder eine Geschwindigkeit einer die Berührspur erzeugenden entlangstreifenden Betätigungsbewegung (eine Entlangstreifgeschwindigkeit) und/oder eine Beschleunigung der die Berührspur erzeugenden entlangstreifenden Betätigungsbewegung (Entlangstreifbeschleunigung) auszuwerten, um eine Geste zu erkennen. Findet eine Berührung durch mehrere voneinander beabstandet voneinander die Positionserfassungseinheit berührende Betätigungselemente statt, so werden selbstverständlich die einzelnen Berührspuren einzeln, sowie in Korrelation miteinander hinsichtlich der angegebenen Merkmale ausgewertet.

Bei einer bevorzugten Weiterbildung der Erfindung ist vorgesehen, dass die Auswertelogik ausgebildet ist, mehrere zeitgleich (in Koinzidenz) erfasste Berührspuren hinsichtlich vorgegebener Muster auszuwerten, um unterschiedliche Gesten zu erkennen und entsprechend der erkannten Gesten die Steuerung zu beeinflussen. Eine Mustererkennung bietet die Möglichkeit, ähnliche Berührspurmuster zu klassifizieren und so eine Wiedererkennung von Gesten zu erleichtern. Zwei "dieselbe Geste" ausführende unterschiedliche Nutzer werden beispielsweise unterschiedliche Berührspuren erzeugen, da ihre Hände anatomisch unterschiedlich ausgestaltet sind. Wird ein gradliniges streifendes Berühren der Positionserfassungseinheit durch zwei quer zur Führungsrichtung voneinander beabstandete Finger ausgeführt, so hängt ein Abstand beispielsweise von der Anatomie und Physiognomie der unterschiedlichen Nutzer ab. Eine Mustererkennung ermöglicht es, diese verschiedenen Berührspurmuster auf einfache Weise zu klassifizieren und als dieselbe Geste zu erkennen.

Um eine Ausführung von vielfältigen Gesten durch Nutzer zur Erfassung von Nutzereingaben mögliche zu machen, ohne hierbei alle Funktionen oder Steuerbefehle auszuführen bzw. auszugeben, die mit auf der Anzeigefläche dargestellten Objekten verknüpft sind, und von einer Berührspur gekreuzt werden, ist bei einer Ausführungsform vorgesehen, dass eine in einem Darstellungsbereich oder Aktivierungsbereich eines auf der Anzeigevorrichtung dargestellten Objekts ermittelte Berührposition ein Auslösen einer dem Objekt zugeordneten Funktion nur bewirkt, wenn die Berührposition ein Anfangspunkt einer Berührspur ist. Darüber hinaus können weitere Bedingungen an die Berührspur gestellt werden, um ein Auslösen einer zugeordneten Funktion zu bewirken.

Bei einer Ausführungsform der Erfindung ist vorgesehen, dass bei mehreren annähernd parallel verlaufenden zeitgleich (koinzident) erfassten Berührspuren der ermittelte Bedienimpuls und/oder eine ermittelte Geschwindigkeit und/oder eine Beschleunigung einer die Berührspur erzeugenden entlangstreifenden Betätigungsbewegung und/oder eine ermittelte Berührspurlänge einer der Berührspuren vergrößert werden, vorzugsweise vervielfacht. Ein Erzeugen von zwei oder mehr parallelen Berührspuren, d. h. ein paralleles Führen von zwei oder mehr Betätigungselementen, die zeitgleich die Positionserfassungseinheit berühren, werden als identische Geste zu einer Geste angesehen, die von einem Betätigungselement ausgeführt wird. Jedoch wird das parallele Führen mehrerer Betätigungselemente als Verstärkung dieser Geste aufgefasst. Eine geradlinig verlaufende Berührungsspur, die beispielsweise als Blättergeste in einer Liste angesehen wird, wird beispielsweise dadurch verstärkt, dass schneller oder in größeren Sprüngen durch die Liste geblättert wird.

Die Merkmale des erfindungsgemäßen Verfahrens weisen dieselben Vorteile wie die entsprechenden Merkmale der erfindungsgemäßen Anzeige- und Bedienvorrichtung auf.

Nachfolgend wird die Erfindung an einem bevorzugten Ausführungsbeispiel unter Bezugnahme auf eine Zeichnung näher erläutert. Hierbei zeigen:
- Fig. 1: eine schematische Darstellung einer Anzeige- und Bedienvorrichtung;
- Fig. 2a - h: schematische Darstellungen von Berührgesten, die mit einem Betätigungselement ausgeführt sind;
- Fig. 3a - h: schematische Darstellungen von Berührgesten, die mit zwei Betätigungselementen ausgeführt sind;
- Fig. 4: eine schematische Darstellung zur Erläuterung einer Verstärkung einer Geste durch Parallelführen mehrerer Betätigungselemente;
- Fig. 5a, 5b: schematische Darstellungen von zwei Gesten, die mit unterschiedlicher Bewegungsgeschwindigkeit und/oder Bewegungsbeschleunigung eines die Geste ausführenden Betätigungselements erzeugt sind.

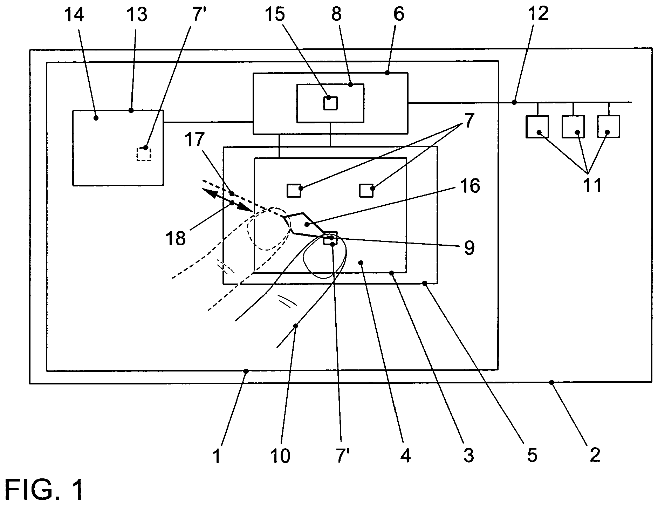

In Fig. 1 ist schematisch eine Anzeige- und Bedienvorrichtung 1 in einem Kraftfahrzeug 2 dargestellt. Die Anzeige- und Bedienvorrichtung 1 umfasst eine Anzeigevorrichtung 3 mit einer Anzeigefläche 4. Vor der Anzeigefläche 4 der Anzeigevorrichtung 3 ist eine berührungsempfindliche Positionserfassungseinheit 5 angeordnet. Die Positionserfassungseinheit 5 ist vorzugsweise mit der Anzeigevorrichtung 3 als Touchscreen ausgebildet. Besonders bevorzugt ist die berührungsempfindliche Positionserfassungseinheit 5 so ausgebildet, dass sie zeitgleich an unterschiedlichen Stellen stattfindende Berührungen erfassen und die jeweiligen Berührpositionen ermitteln kann.

Die Anzeigevorrichtung 3 sowie die berührungsempfindliche Positionserfassungseinheit 5 sind mit einer Steuereinrichtung 6 gekoppelt. Diese steuert zum einen eine Darstellung von Objekten 7, die auf der Anzeigefläche 4 der Anzeigevorrichtung 3 dargestellt sind. Diese Objekte 7 können beispielsweise als virtuelle Bedienelemente ausgebildet sein. Die Steuereinrichtung 6 umfasst ferner eine Auswertelogik 8, die die Berührpositionen 9 eines Betätigungselements 10 auswertet. Die Auswertelogik kann auf unterschiedliche Art und Weise, beispielsweise mittels einer festverdrahteten Schaltung oder einer in Hard- und Software implementierten Anordnung umgesetzt sein. Die Auswertelogik ist ausgestaltet, die erfassten Berührpositionen zeitaufgelöst auszuwerten. Zeitlich nacheinander unmittelbar aufeinander folgend erfasste Berührpositionen, die aneinandergereiht eine stetige Kurve ergeben, werden zu einer Berührspur zusammengefasst. Die Auswertelogik ist vorzugsweise so ausgestaltet, dass sie die Berührspur mittels einer Mustererkennung klassifiziert, um eine Geste zu erkennen. Wird eine Betätigungshandlung mittels zwei Betätigungselemente (nicht dargestellt) vorgenommen, so dass zeitgleich (koinzident) zwei Berührspuren erzeugt werden, so werden diese einzeln und/oder in Korrelation ausgewertet, um eine oder mehrere Gesten zu erkennen.

Anhand der erkannten Geste wird eine über die Steuereinrichtung 6 vorgenommene Beeinflussung und Steuerung von Funktionen oder Systemen 11 beeinflusst, die mit der Steuereinrichtung 6 beispielsweise über einen Fahrzeugdatenbus 12 verbunden sind. Bei den Systemen 11 kann es sich um fahrzeuginterne, fahrzeugexterne oder kurzfristig mit dem Fahrzeug gekoppelte Systeme, beispielsweise einen über eine Kabelschnittstelle verbundenen MP3-Player oder Ähnliches handeln.

Bei der dargestellten Ausführungsform umfasst die Anzeige- und Bedienvorrichtung 1 eine weitere Anzeigevorrichtung 13 mit einer weiteren Anzeigefläche 14. Die weitere Anzeigevorrichtung 13 ist ebenfalls mit der Steuereinrichtung 6 gekoppelt. Die Anzeige- und Bedienvorrichtung 1 ist so ausgebildet, dass die Auswertelogik 8 mindestens eine Differenziereinheit 15 umfasst, die eine von den Berührpositionen 9 gebildete Berührspur 16 dahingehend auswertet, mit welcher Geschwindigkeit bzw. welcher Beschleunigung die die Berührspur 16 erzeugende streifende Bewegung des Betätigungselements 10 ausgeführt ist. In Fig. 1 ist die Berührspur als sich verbreiternder Pfeil dargestellt, um eine Richtung, der erzeugenden Bewegung sowie eine Geschwindigkeit oder alternativ eine Beschleunigung der die Berührspur 16 erzeugenden Bewegung zu repräsentieren. Das Objekt 7', in dessen Darstellungsbereich die Berührspur 16 ihren Ursprung hat, wird durch die streifende beschleunigte Bewegung des Betätigungselements auf der Anzeigefläche bewegt. Durch die Differenziereinheit wird die Beschleunigung der erzeugenden Bewegung ermittelt. Dem Objekt 7' sind eine Masse und ein Reibwert oder Reibungskoeffizent als physikalische Eigenschaften zugewiesen. Hierüber ist es möglich anhand physikalischer Bewegungsgesetze eine Bahnkurve 17 zu errechnen, entlang derer sich das Objekt 7' bewegen würde, wenn es durch das Betätigungselement gemäß der Berührspur in Bewegung gesetzt worden wäre. Die errechnete Bahnkurve 17 ist gepunktet dargestellt. Die Bahnkurve 17 weist aus der Anzeigefläche 4 der Anzeigevorrichtung 3 hinaus. Hierbei wird ein Mindestabstand, welcher durch einen Doppelpfeil 18 angedeutet ist, überschritten. Die Bahnkurve 17 weist in Richtung auf die weitere Anzeigefläche 14. Die Auswertelogik 8 ist so ausgebildet, dass in einem solchen Fall die Steuereinrichtung 6 so beeinflusst wird, dass das Objekt anschließend auf der weiteren Anzeigefläche 14 dargestellt wird, wie dieses gestrichelt angedeutet ist.

Die Funktionsweise der Anzeige- und Bedienvorrichtung nach Fig. 1 ist exemplarisch für eine Berührgeste beschrieben. Es ergibt sich für den Fachmann, dass eine Vielzahl weiterer Berührgesten möglich ist. Ebenfalls ergibt es sich für den Fachmann, dass auch Ausführungsformen denkbar sind, die nur eine Anzeigevorrichtung bzw. Anzeigefläche oder mehr als zwei Anzeigevorrichtungen bzw. Anzeigeflächen umfassen.

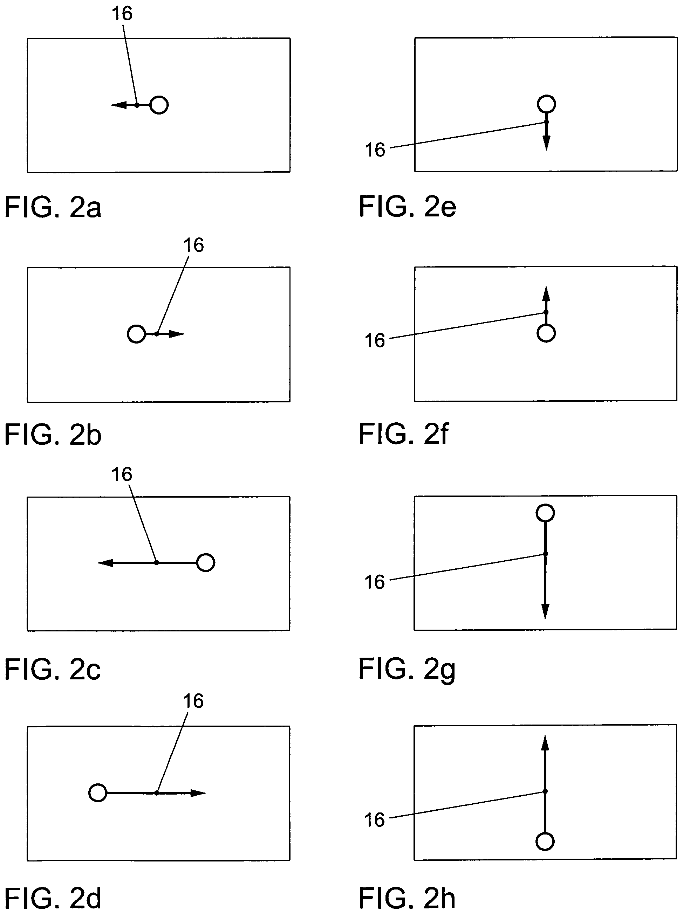

In Fig. 2a - 2h sind unterschiedliche Berührgesten dargestellt, die mittels eines Betätigungselements, beispielsweise eines Fingers eines Nutzers, ausgeführt werden können. Die Gesten werden hinsichtlich ihrer Berührspurlänge und ihrer Richtung unterschieden.

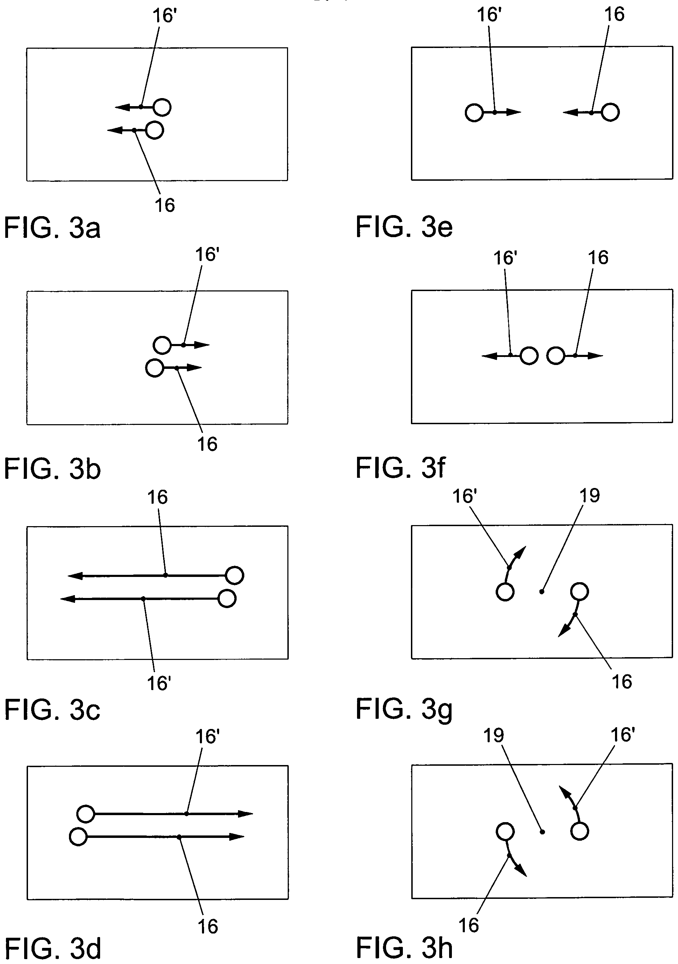

In Fig. 3a - 3h sind Beispiele für Berührgesten dargestellt, die mithilfe von zwei Betätigungselementen, beispielsweise zwei Fingern bzw. einem Daumen und einem Finger, ausgeführt werden können. Die Gesten 2a - 2d weisen jeweils zwei parallele Berührspuren 16, 16' auf, die sich hinsichtlich ihrer Länge und/oder Richtung, in der sie durchlaufen sind, unterscheiden. Die in Fig. 3e und 3f dargestellten Berührgesten können beispielsweise mittels eines Zusammenführens bzw. Spreizens von zwei Fingern bzw. eines Fingers und des Daumens erzeugt werden. Die Gesten gemäß der Fig. 3g und 3h entstehen durch eine kreisförmige Bewegung von zwei Betätigungselementen um einen gemeinsamen Mittelpunkt 19 und unterscheiden sich hinsichtlich ihrer Drehrichtung im Uhrzeigersinn (Fig. 3g) und entgegen des Uhrzeigersinns (Fig. 3h).

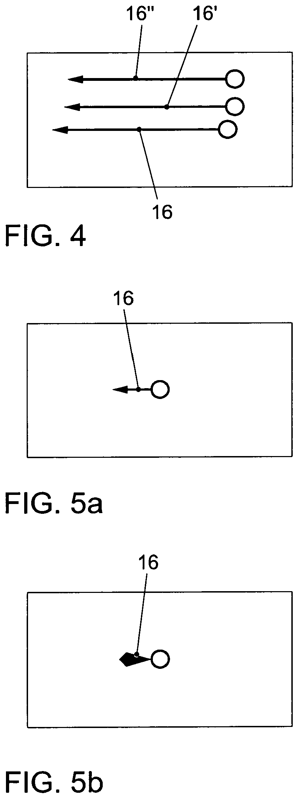

Bei einer bevorzugten Ausführungsform ist vorgesehen, dass ein paralleles Führen mehrerer Betätigungselemente eine Verstärkung einer Geste bewirken soll, die durch lediglich ein Betätigungselement erzeugt wird. Dieses soll anhand von Fig. 4 kurz erläutert werden. Bei der dort dargestellten Geste werden drei Betätigungselemente parallel von recht nach links über die berührempfindliche Positionserfassungseinheit bewegt, so dass drei parallele Berührspuren 16, 16', 16" in Koinzidenz entstehen. Wird die erkannte Geste beispielsweise genutzt, um bei einer Wiedergabe eines Musiktitels mittels eines über die Anzeige- und Bedienvorrichtung bedienten MP3-Players eine Länge eines Vorspulens innerhalb des Titels zu bestimmen, so wird durch die dargestellte "Dreifachgeste" dreimal soweit innerhalb des Titels vorgespult, als wenn eine einzelne Berührspur 16 durch eine Betätigung mit nur einem Betätigungselement erzeugt worden wäre.

In Fig. 5a und 5b sind schließlich zwei Berührspuren schematisch angedeutet, die sich dadurch unterscheiden, dass sie mittels unterschiedlich beschleunigter Bewegungen ausgeführt sind. Während die streifende Betätigung, die zu der Berührspur nach Fig. 5a geführt hat, mit einer konstanten Geschwindigkeit ausgeführt ist, wurde die Bewegung des Betätigungselements, die zu der Berührspur nach Fig. 5b führte, beschleunigt ausgeführt. Dieses ist durch eine Verbreiterung des Pfeils angedeutet, der die Berührspur 16 symbolisiert. Eine Länge der Berührspuren 16 nach Fig. 5a und 5b ist gleich, jedoch lässt eine zeitdifferenzierte Auswertung der Berührpositionen, die die Berührspur 16 ergeben, eine Unterscheidung der Berührspuren 16 zu.

Die beschriebenen Gesten und ihre Verwendung zur Ausgestaltung von Benutzerschnittstellen in einem Kräftfahrzeug sind lediglich beispielhaft und sollen nicht beschränkend ausgelegt werden.

### Bezugszeichenliste

- 1: Anzeige- und Bedienvorrichtung
- 2: Kraftfahrzeug
- 3: Anzeigevorrichtung
- 4: Anzeigefläche
- 5: berührungsempfindliche Positionserfassungseinheit
- 6: Steuereinrichtung
- 7, 7': Objekte
- 8: Auswertelogik
- 9: Berührpositionen
- 10: Betätigungselement
- 11: Systeme
- 12: Fahrzeugdatenbus
- 13: weitere Anzeigevorrichtung
- 14: weitere Anzeigefläche
- 15: Differenziereinheit
- 16: Berührspur
- 17: Bahnkurve
- 18: Doppelpfeil
- 19: Mittelpunkt

## Patentansprüche

1. Anzeige- und Bedienvorrichtung (1) eines Kraftfahrzeug (2) umfassend mindestens eine Anzeigevorrichtung (3),
eine mit der mindestens einen Anzeigevorrichtung (3) gekoppelte berührungsempfindliche Positionserfassungseinheit (5) und
eine mit der mindestens einen Anzeigevorrichtung (3) und der Positionserfassungseinheit (5) gekoppelte Steuereinrichtung (6), die eine Auswertelogik (8) umfasst, die von der Positionserfassungseinheit (5) erfasste Berührpositionen (9) auswertet und hierüber eine Steuerung einer Darstellung von Informationen auf der mindestens einen Anzeigevorrichtung (3) und ein Aufrufen von Funktionen und/oder Steuern von über die Anzeige- und Bedienvorrichtung (1) bedienbaren Systemen (11) beeinflusst,
wobei
die Auswertelogik (8) ausgebildet ist, die erfassten Berührpositionen (9) zeitaufgelöst auszuwerten, wobei die zeitlich nacheinander stetig ineinander übergehenden erfassten Berührpositionen (9) zu einer Berührspur (16) zusammengefasst werden und die Auswertelogik (8) mindestens eine Differenziereinheit (15) umfasst, die eine Geschwindigkeit und/oder eine Beschleunigung einer die Berührspur (16) erzeugenden entlangstreifenden Betätigungsbewegung ermittelt, und die Beeinflussung der Steuerung für unterschiedliche ermittelte Geschwindigkeiten und/oder Beschleunigungen unterschiedlich ist, so dass zum Erhöhen einer Anzahl von möglichen unterscheidbaren Betätigungshandlungen neben einer Form der zu der Berührspur (16) zusammengefassten zeitlich nacheinander stetig ineinander übergehenden erfassten Berührpositionen (9) auch die Geschwindigkeit oder die Beschleunigung der die Berührspur (16) erzeugenden entlangstreifenden Betätigungsbewegung die Nutzereingabe bestimmt, und wobei die Steuereinrichtung (6) ausgebildet ist, auf der Anzeigefläche (4) dargestellten Objekten (7, 7') eine Masse und ein Reibungskoeffizient zuzuordnen, und die Auswertelogik (8) anhand einer ermittelten Beschleunigung, mit der die die Berührspur (16) erzeugende entlangstreifende Betätigungsbewegung ausgeführt ist, und zumindest einer Richtung der Berührspur (16) sowie gegebenenfalls weiteren Eigenschaften der Berührspur (16) und/oder der die Berührspur (16) erzeugenden Bewegung einen Bedienimpuls ermittelt, und ein Objekt (7, 7'), in dessen Darstellungsbereich oder Aktivierungsbereich die Berührspur (16) beginnt, gemäß einer anhand der zugeordneten Masse und dem zugeordneten Reibungskoeffizienten und des ermittelten Bedienimpulses errechneten Bahnkurve (17) auf der Anzeigevorrichtung (3) bewegt wird,
**dadurch gekennzeichnet, dass**
mindestens eine zweite von einer Anzeigefläche (4) der mindestens einen Anzeigevorrichtung (3) getrennt ausgebildete weitere Anzeigefläche (14) vorgesehen ist und die Steuereinrichtung (6) ausgebildet ist, ein Objekt (7, 7'), dessen Bahnkurve (17) aus der Anzeigefläche (4) in einer Richtung, in der sich die mindestens eine weitere Anzeigefläche (14) befindet, um eine vorgegebene Mindestlänge hinausweist, auf der weiteren Anzeigefläche (14) zur Anzeige zu bringen.

2. Anzeige- und Bedienvorrichtung (1) nach einem der genannten Ansprüche, **dadurch gekennzeichnet, dass** die eine berührungsempfindliche Positionserfassungseinheit (5) ausgebildet ist, die Berührpositionen (9) von mindestens zwei, vorzugsweise mehreren voneinander beabstandeten zeitgleich stattfindenden Berührungen zu erfassen, und die Auswertelogik (8) ausgebildet ist, die unterschiedlichen Berührpositionen (9) in Koinzidenz auszuwerten.

3. Anzeige- und Bedienvorrichtung (1) nach einem der genannten Ansprüche, **dadurch gekennzeichnet, dass** die Auswertelogik (8) ausgebildet ist, mehrere zeitgleich in Koinzidenz erfasste Berührspuren (16) hinsichtlich vorgegebener Muster auszuwerten, um unterschiedliche Gesten zu erkennen und entsprechend der erkannten Gesten die Steuerung zu beeinflussen.

4. Anzeige- und Bedienvorrichtung (1) nach einem der vorangehenden Ansprüche,
**dadurch gekennzeichnet, dass** bei mehreren annähernd parallel verlaufenden zeitgleich koinzident erfassten Berührspuren (16) der ermittelte Bedienimpuls und/oder eine ermittelte Bediengeschwindigkeit und/oder eine ermittelte Berührspurlänge (16) einer der Berührspuren (16) vergrößert werden, vorzugsweise vervielfacht.

5. Anzeige- und Bedienvorrichtung (1) nach einem der genannten Ansprüche, **dadurch gekennzeichnet, dass** die Auswertelogik (8) ausgebildet ist, jeweils eine Richtung der Berührspur (16) und/oder eine Form der Berührspur (16) und/oder eine Geschwindigkeit einer die Berührspur (16) erzeugenden entlangstreifenden Betätigungsbewegung, welche als Entlangstreifgeschwindigkeit bezeichnet wird, und/oder eine Beschleunigung der die Berührspur (16) erzeugenden entlangstreifenden Betätigungsbewegung, welche als Entlangstreifbeschleunigung bezeichnet wird, auszuwerten, um eine Geste zu erkennen.

6. Anzeige- und Bedienvorrichtung (1) nach einem der genannten Ansprüche, **dadurch gekennzeichnet, dass** eine in einem Darstellungsbereich oder Aktivierungsbereich eines auf der Anzeigevorrichtung (3) dargestellten Objekts (7, 7') ermittelte Berührposition (9) ein Auslösen einer dem Objekt (7, 7') zugeordneten Funktion nur bewirkt wird, wenn die Berührposition (9) ein Anfangspunkt einer Berührspur (16) ist.

7. Verfahren zum Betreiben einer Anzeige- und Bedienvorrichtung (1) eines Kraftfahrzeug (2), wobei die Anzeige- und Bedienvorrichtung (1) eine Anzeigevorrichtung (3), eine mit der mindestens einen Anzeigevorrichtung (3) gekoppelte berührungsempfindliche Positionserfassungseinheit (5) und eine mit der mindestens einen Anzeigevorrichtung (3) und der Positionserfassungseinheit (5) gekoppelte Steuereinrichtung (6) umfasst, wobei das Verfahren die Schritte umfasst:
Erfassen von Berührpositionen (9) mittels der berührungsempfindlichen Positionserfassungseinheit (5),
Auswerten der erfassten Berührpositionen (9) mittels einer Auswertelogik (8) der Steuereinrichtung (6),
Steuern einer Darstellung von Informationen auf der mindestens einen Anzeigevorrichtung (3) und Aufrufen von Funktionen und/oder Steuern von über die Anzeige- und Bedienvorrichtung (1) bedienbaren Systemen jeweils in Abhängigkeit dem Ergebnis der Auswertung der erfassten Berührpositionen (9),
wobei
die erfassten Berührpositionen (9) zeitaufgelöst ausgewertet werden, wobei die zeitlich nacheinander stetig ineinander übergehenden erfassten Berührpositionen (9) zu einer Berührspur (16) zusammengefasst werden und die Auswertelogik mittels mindestens einer Differenziereinheit eine Geschwindigkeit und/oder eine Beschleunigung einer die Berührspur (16) erzeugenden entlangstreifenden Betätigungsbewegung ermittelt, und ein Ergebnis der Auswertung für unterschiedliche ermittelte Geschwindigkeiten und/oder Beschleunigungen unterschiedlich ist, so dass zum Erhöhen einer Anzahl von möglichen unterscheidbaren Betätigungshandlungen neben einer Form der zu der Berührspur (16) zusammengefassten zeitlich nacheinander stetig ineinander übergehenden erfassten Berührpositionen (9) auch die Geschwindigkeit oder die Beschleunigung der die Berührspur (16) erzeugenden entlangstreifenden Betätigungsbewegung die Nutzereingabe bestimmt, und wobei auf einer Anzeigefläche (4) dargestellten Objekten (7, 7') eine Masse und ein Reibungskoeffizient zugeordnet werden, anhand einer ermittelten Beschleunigung, mit der eine die Berührspur (16) erzeugende entlangstreifende Betätigungsbewegung ausgeführt ist, und zumindest einer Richtung der Berührspur (16) sowie gegebenenfalls weiteren Eigenschaften der Berührspur (16) und/oder der die Berührspur (16) erzeugenden Bewegung ein Bedienimpuls ermittelt werden, und ein Objekt (7, 7'), in dessen Darstellungsbereich oder Aktivierungsbereich die Berührspur (16) beginnt, gemäß einer anhand der zugeordneten Masse und dem zugeordneten Reibungskoeffizienten und des ermittelten Bedienimpulses errechneten Bahnkurve (17) auf der Anzeigevorrichtung (3) bewegt wird,
**dadurch gekennzeichnet, dass**
die Anzeige- und Bedienvorrichtung (1) mindestens zwei voneinander getrennt ausgebildete Anzeigeflächen (4, 14) umfasst, und ein Objekt (7, 7'), dessen Bahnkurve (17) aus einer der Anzeigeflächen (4, 14) in einer Richtung, in der sich die mindestens eine andere der Anzeigeflächen (4, 14) befindet, um eine vorgegebene Mindestlänge hinausweist, in der anderen der mindestens zwei Anzeigeflächen (4, 14) zur Anzeige gebracht wird.

8. Verfahren nach Anspruch 7, **dadurch gekennzeichnet, dass** mittels der berührungsempfindlichen Positionserfassungseinheit (5) Berührpositionen (9) von mindestens zwei, vorzugsweise mehreren voneinander beabstandeten zeitgleich stattfindenden Berührungen erfasst werden und mittels der Auswertelogik (8) die unterschiedlichen Berührpositionen (9) in Koinzidenz ausgewertet werden.

9. Verfahren nach einem der Ansprüche 7 bis 8, **dadurch gekennzeichnet, dass** mehrere zeitgleich in Koinzidenz erfasste Berührspuren (16) hinsichtlich vorgegebener Muster ausgewertet werden, um unterschiedliche Gesten zu erkennen.

10. Verfahren nach einem der Ansprüche 7 bis 9, **dadurch gekennzeichnet, dass** die Auswertung eine Richtung der Berührspur (16) und/oder eine Form der Berührspur (16) und/oder eine Geschwindigkeit einer die Berührspur (16) erzeugenden entlangstreifenden Betätigungsbewegung, welche als Entlangstreifgeschwindigkeit bezeichnet wird, und/oder einer Beschleunigung der die Berührspur (16) erzeugenden entlangstreifenden Betätigungsbewegung, welche als Entlangstreifbeschleunigung bezeichnet wird, ermittelt, um abhängig hiervon eine Geste zu erkennen.

11. Verfahren nach einem der Ansprüche 7 bis 10, **dadurch gekennzeichnet, dass** für eine in einem Darstellungsbereich oder Aktivierungsbereich eines auf der Anzeigevorrichtung (3) dargestellten Objekts (7, 7') ermittelte Berührposition (9) ein Auslösen einer dem Objekt (7, 7') zugeordneten Funktion nur bewirkt wird, wenn die Berührposition (9) ein Anfangspunkt einer Berührspur (16) ist.

## Claims

1. Display and operator control device (1) of a motor vehicle (2) comprising at least one display device (3), a touch-sensitive position detection unit (5) coupled to the at least one display device (3) and a control device (6) coupled to the at least one display device (3) and the position detection unit (5), which comprises an evaluation logic (8), which evaluates the touch positions (9) detected by the position detection unit (5) and by means of this influences the control of a representation of information on the at least one display device (3) and a calling up of functions and/or control of systems (11) that can be operated via the display and operator control device (1),
wherein
the evaluation logic (8) is designed to evaluate the detected touch positions (9) in a time-resolved manner, wherein the detected touch positions (9) continuously merging into one another sequentially in time are combined to form a touch trace (16) and the evaluation logic (8) comprises at least one differentiating unit (15), which determines a velocity and/or an acceleration of a glancing actuation movement generating the touch trace (16), and the influencing of the control is different for differently determined velocities and/or accelerations, so that to increase a number of possible differentiable actuation actions in addition to a form of the detected touch positions (9) continuously merging into one another sequentially in time combined into the touch trace (16) also the velocity or the acceleration of the glancing actuation movement generating the touch trace (16) determines the user input, and wherein the control device (6) is designed to assign a mass and a coefficient of friction to objects (7, 7') represented on the display surface (4) and the evaluation logic (8) by means of a determined acceleration, with which the glancing actuation movement generating the touch trace (16) is carried out, and at least of one direction of the touch trace (16) and optionally of further properties of the touch trace (16) and/or of the movement generating the touch trace (16) determines a control impulse and an object (7, 7') in the display area or activation area of which the touch trace (16) begins is moved on the display device (3) according to a path curve (17) calculated by means of the assigned mass and the assigned coefficient of friction and the determined control impulse,
**characterized in that**
at least one second further display surface (14) designed separately from a display surface (4) of the at least one display device (3) is provided and the control device (6) is designed to display an object (7, 7') on the further display surface (14), the path curve (17) of which points beyond the display surface (4) by a predetermined minimum length in a direction, in which the at least one further display surface (14) is located.

2. The display and operator control device (1) according to any one of the mentioned claims, **characterized in that** the one touch-sensitive position detection unit (5) is designed to detect the touch positions (9) of at least two, preferably a plurality of simultaneously occurring touches which are spaced apart from one another, and the evaluation logic (8) is designed to evaluate the different touch positions (9) in coincidence.

3. The display and operator control device (1) according to any one of the mentioned claims, **characterized in that** the evaluation logic (8) is designed to evaluate a plurality of touch traces (16) detected simultaneously in coincidence with regard to predetermined patterns, in order to detect different gestures and to influence the control according to the detected gestures.

4. The display and operator control device (1) according to any of the preceding claims, **characterized in that** in the case of a plurality of touch traces (16) running approximately parallel and detected simultaneously in coincidence, the determined control impulse and/or a determined control velocity and/or a determined touch trace length (16) of one of the touch traces (16) are enlarged, preferably multiplied.

5. The display and operator control device (1) according to any one of the mentioned claims, **characterized in that** the evaluation logic (8) is designed in each case to evaluate a direction of the touch trace (16) and/or a form of the touch trace (16) and/or a velocity of a glancing actuation movement generating the touch trace (16), which is referred to as the glancing velocity, and/or an acceleration of the glancing actuation movement generating the touch trace (16), which is referred to as the glancing acceleration, in order to detect a gesture.

6. The display and operator control device (1) according to any one of the mentioned claims, **characterized in that** for a touch position (9) determined in a display area or activation area of an object (7, 7') represented on the display device (3), a triggering of a function assigned to the object (7, 7') is only brought about, if the touch position (9) is a starting point of a touch trace (16).

7. A method for operating a display and operator control device (1) of a motor vehicle (2), wherein the display and operator control device (1) comprises a display device (3), a touch-sensitive position detection unit (5) coupled with the at least one display device (3) and a control device (6) coupled with the at least one display device (3) and the position detection unit (5), wherein the method comprises the steps:
Detection of touch positions (9) by means of the touch-sensitive position detection unit (5),
evaluation of the detected touch positions (9) by means of an evaluation logic (8) of the control device (6),
control of a representation of information on the at least one display device (3) and calling up of functions and/or control of systems controllable by means of the display and operator control device (1) in each case as a function of the result of the evaluation of the detected touch positions (9),
wherein
the detected touch positions (9) are evaluated in a time-resolved manner, wherein the detected touch positions (9) continuously merging into one another sequentially in time are combined to form a touch trace (16) and the evaluation logic (8) by means of at least one differentiating unit determines a velocity and/or an acceleration of a glancing actuation movement generating the touch trace (16), and a result of the evaluation is different for differently determined velocities and/or accelerations, so that to increase a number of possible differentiable actuation actions in addition to a form of the detected touch positions (9) continuously merging into one another sequentially in time combined into the touch trace (16) also the velocity or the acceleration of the glancing actuation movement generating the touch trace (16) determines the user input, and wherein a mass and a coefficient of friction are assigned to objects (7, 7') represented on the display surface (4), and by means of a determined acceleration, with which the glancing actuation movement generating the touch trace (16) is carried out, and at least of one direction of the touch trace (16) and optionally of further properties of the touch trace (16) and/or of the movement generating the touch trace (16) a control impulse is determined and an object (7, 7') in the display area or activation area of which the touch trace (16) begins is moved on the display device (3) according to a path curve (17) calculated by means of the assigned mass and the assigned coefficient of friction and the determined control impulse,
**characterized in that**
the display and operator control device (1) comprises at least two display surfaces (4, 14) designed separately from one another, and an object (7, 7), the path curve (17) of which points beyond the display surfaces (4,14) in a direction, in which at least one other of the display surfaces (4, 14) is located, by a predetermined minimum length, is displayed on the other of the at least two display surfaces (4, 14).

8. The method according to Claim 7, **characterized in that** by means of the touch-sensitive position detection unit (5) touch positons (9) of at least two, preferably a plurality of simultaneously occurring touches which are spaced apart from one another are detected and by means of the evaluation logic (8) the different touch positions (9) are evaluated in coincidence.

9. The method according to any one of Claims 7 to 8, **characterized in that** a plurality of touch traces (16) detected simultaneously in coincidence are evaluated with regard to predetermined patterns, in order to detect different gestures.

10. The method according to any one of Claims 7 to 9, **characterized in that** the evaluation determines a direction of the touch trace (16) and/or a form of the touch trace (16) and/or a velocity of a glancing actuating movement generating the touch trace (16), which is referred to as the glancing velocity, and/or an acceleration of the glancing actuation movement generating the touch trace (16), which is referred to as the glancing acceleration, in order to detect a gesture depending thereon.

11. The method according to any one of Claims 7 to 10, **characterized in that** for a touch position determined in a display area or activation area of an object (7, 7') represented on the display device (3) a triggering of a function assigned to the object (7, 7') is only brought about, if the touch position (9) is a starting point of a touch trace (16).

## Revendications

1. Dispositif d'affichage et de commande (1) d'un véhicule automobile (2) comprenant
au moins un dispositif d'affichage (3),
une unité de détection de position tactile (5) couplée avec l'au moins un dispositif d'affichage (3) et
un dispositif de contrôle (6) couplé avec l'au moins un dispositif d'affichage (3) et l'unité de détection de position (5), qui comprend une logique d'analyse (8) qui analyse les positions de contact (9) détectées par l'unité de détection de position (5) et influe, grâce à celles-ci, un contrôle d'une représentation d'informations sur le dispositif d'affichage (3) et un appel de fonctions et/ou de contrôles de systèmes (11) pouvant être commandés par le dispositif d'affichage et de commande (1),
la logique d'analyse (8) étant conçue pour analyser, avec une résolution dans le temps, les positions de contact (9) détectées, les positions de contact (9) détectées, s'entremêlant en permanence de manière successive, étant regroupées en une trace de contact (16) et la logique d'analyse (8) comprenant au moins une unité de différenciation (15) qui détermine une vitesse et/ou une accélération d'un mouvement d'actionnement par frôlement produisant la trace de contact (16) et l'influence du contrôle étant différente pour différentes vitesses et/ou accélérations déterminées, de façon à ce que, pour augmenter un nombre d'actions d'actionnement distinctes possibles, en plus d'une forme des positions de contact (9) détectées, s'entremêlant en permanence de manière successive, regroupées dans la trace de contact (16), la vitesse ou l'accélération du mouvement d'actionnement par frôlement produisant la trace de contact (16), détermine l'entrée de l'utilisateur et le dispositif de contrôle (6) étant conçu pour attribuer, aux objets (7, 7') représentés sur la surface d'affichage (4), une masse et un coefficient de friction et la logique d'analyse (8), à l'aide d'une accélération déterminée, avec laquelle le mouvement d'actionnement par frôlement produisant la trace de contact (16) est exécuté, et d'au moins une direction de la trace de contact (16) ainsi que, le cas échéant, d'autres propriétés de la trace de contact (16) et/ou du mouvement produisant la trace de contact (16), déterminant une impulsion de commande et un objet (7, 7') dans la zone de représentation ou dans la zone d'activation duquel la trace de contact (16) commence, étant déplacé sur le dispositif d'affichage (3) selon une trajectoire (17) calculée à l'aide de la masse attribuée et du coefficient de friction attribué et de l'impulsion de commande déterminée,
**caractérisé en ce que**
au moins une deuxième surface d'affichage (14) de l'au moins un dispositif d'affichage (3), réalisée séparément d'une surface d'affichage (4), est prévue et le dispositif de contrôle (6) est conçu pour afficher un objet (7, 7'), dont la trajectoire (17) est orientée hors de la surface d'affichage (4) dans une direction, dans laquelle se trouve l'au moins une autre surface d'affichage (14), d'une longueur minimale prédéterminée, sur l'autre surface d'affichage (14).

2. Dispositif d'affichage et de commande (1) selon l'une des revendications mentionnées, **caractérisé en ce que** l'unité de détection de position tactile (5) est conçue pour détecter les positions de contact (9) d'au moins deux, de préférence plusieurs, contacts ayant lieu simultanément de manière distante les uns des autres, et la logique d'analyse (8) est conçue pour analyser les différentes positions de contact (9) en coïncidence.

3. Dispositif d'affichage et de commande (1) selon l'une des revendications mentionnées, **caractérisé en ce que** la logique d'analyse (8) est conçue pour analyser plusieurs traces de contact (16) détectées simultanément en coïncidence en ce qui concerne un modèle prédéfini afin de reconnaître différentes gestes et d'influer sur le contrôle en fonction des gestes reconnus.

4. Dispositif d'affichage et de commande (1) selon l'une des revendications précédentes, **caractérisé en ce que**, pour plusieurs traces de contact (16) détectées de manière coïncidente simultanément et s'étendant de manière approximativement parallèle, l'impulsion de commande déterminée et/ou la vitesse de commande déterminée et/ou une longueur de trace de contact (16) déterminée d'une des traces de contact (16) sont agrandies, de préférence multipliées.

5. Dispositif d'affichage et de commande (1) selon l'une des revendications mentionnées, **caractérisé en ce que** la logique d'analyse (8) est conçue pour analyser une direction de la trace de contact (16) et/ou une forme de la trace de contact (16) et/ou une vitesse d'un mouvement d'actionnement par frôlement produisant la trace de contact (16), qui est appelée vitesse de frôlement, et/ou une accélération du mouvement d'actionnement par frôlement produisant la trace de contact (16), qui est appelée accélération de frôlement, afin de reconnaître un geste.

6. Dispositif d'affichage et de commande (1) selon l'une des revendications mentionnées, **caractérisé en ce qu'**une position de contact (9) déterminée dans une zone de représentation ou une zone d'activation d'un objet (7, 7') représenté sur le dispositif d'affichage (3) provoque un déclenchement d'une fonction attribuée à l'objet (7, 7') uniquement si la position de contact (9) est un point de départ d'une trace de contact (16).

7. Procédé d'exploitation d'un dispositif d'affichage et de commande (1) d'un véhicule automobile (2), ce dispositif d'affichage (3) et de commande (1) comprenant un dispositif d'affichage (3), une unité de détection de position tactile (5) couplée avec l'au moins un dispositif d'affichage (3) et un dispositif de contrôle (6) couplé avec l'au moins un dispositif d'affichage (3) et l'unité de détection de position (5), ce procédé comprenant les étapes suivantes :
détection de positions de contact (9) au moyen d'une unité de détection de position (5),
analyse des positions de contact (9) détectées au moyen d'une logique d'analyse (8) du dispositif de contrôle (6),
contrôle d'une représentation d'informations sur l'au moins un dispositif d'affichage (3) et appel de fonctions et/ou contrôle de systèmes pouvant être commandés par l'intermédiaire du dispositif d'affichage et de commande (1) en fonction du résultat de l'analyse des positions de contact (9) détectées,
les positions de contact (9) détectées étant analysées avec une résolution dans le temps, les positions de contact (9) détectées, s'entremêlant en permanence de manière successive, étant regroupées en une trace de contact (16) et la logique d'analyse déterminant, au moyen d'au moins une unité de différenciation, une vitesse et/ou une accélération d'un mouvement d'actionnement par frôlement produisant la trace de contact (16) et un résultat de l'analyse étant différent pour différentes vitesses et/ou accélérations déterminées, de façon à ce que, pour augmenter un nombre d'actions d'actionnement distinctes possibles, en plus d'une forme des positions de contact (9) détectées, s'entremêlant en permanence de manière successive, regroupées dans la trace de contact (16), la vitesse ou l'accélération du mouvement d'actionnement par frôlement produisant la trace de contact (16), détermine également l'entrée de l'utilisateur et, aux objets (7, 7') représentés sur la surface d'affichage (4), une masse et un coefficient de friction étant attribués et, à l'aide d'une accélération déterminée, avec laquelle le mouvement d'actionnement par frôlement produisant la trace de contact (16) est exécuté, et d'au moins une direction de la trace de contact (16) ainsi que, le cas échéant, d'autres propriétés de la trace de contact (16) et/ou du mouvement produisant la trace de contact (16), une impulsion de commande et un objet (7, 7') dans la zone de représentation ou dans la zone d'activation duquel la trace de contact (16) commence, étant déplacé sur le dispositif d'affichage (3) selon une trajectoire (17) calculée à l'aide de la masse attribuée et du coefficient de friction attribué et de l'impulsion de commande déterminée,
**caractérisé en ce que**
le dispositif d'affichage et de commande (1) comprend au moins deux surfaces d'affichage (4, 14) distinctes, et un objet (7, 7'), dont la trajectoire (17) est orientée hors d'une des surfaces d'affichage (4, 14) dans une direction, dans laquelle se trouve l'au moins une autre surface d'affichage (4, 14), d'une longueur minimale prédéterminée, est affiché sur l'autre des au moins deux surfaces d'affichage (14).

8. Procédé selon la revendication 7, **caractérisé en ce que**, au moyen de l'unité de détection de position tactile (5) des positions de contact (9) d'au moins deux, de préférence plusieurs, contacts ayant lieu simultanément et distants entre eux, sont détectées et les différentes positions de contact (9) sont analysées en coïncidence au moyen de la logique d'analyse (8).

9. Procédé selon l'une des revendications 7 ou 8, **caractérisé en ce que** plusieurs traces de contact (16) détectées en coïncidence sont analysées en ce qui concerne un modèle prédéfini afin de reconnaître différents gestes.

10. Procédé selon l'une des revendications 7 à 9, **caractérisé en ce que** l'analyse détermine une direction de la trace de contact (16) et/ou une forme de la trace de contact (16) et/ou une vitesse d'un mouvement d'actionnement par frôlement produisant la trace de contact (16), qui est appelée vitesse de frôlement, et/ou une accélération du mouvement d'actionnement par frôlement produisant la trace de contact (16), qui est appelée accélération de frôlement, afin de reconnaître un geste en fonction de celles-ci.

11. Procédé selon l'une des revendications 7 à 10, **caractérisé en ce que**, pour une position de contact (9) déterminée dans la zone de représentation ou la zone d'activation d'un objet (7, 7') représenté sur le dispositif d'affichage (3), un déclenchement d'une fonction attribuée à l'objet (7, 7') n'est provoqué que si la position de contact (9) est un point de départ d'une trace de contact (16).
